# EUROPEAN PATENT APPLICATION

(11) **EP 2 607 903 A2**
(43) Date of publication of application: **26.06.2013**
(21) Application number: 12198783.8
(22) Date of filing: 20.12.2012
(51) Int. Cl.: G01N 35/00, G01N 21/49, G06F 19/00, G06F 21/00

(54) **Particle monitoring with secure data logging**

(30) Priority: 23.12.2011 US 201113336657
(71) Applicant: Hach Company, Loveland, CO 80539 (US)
(72) Inventor: Latimer, Robert A., Medford, OR 97504 (US); Modic, Walter D., Grants Pass, OR 97527 (US); Wright, Eric Robert, Medford, OR 97501 (US); Yates, Paul H., Grants Pass, OR 97526 (US)
(74) Representative: Sandri, Sandro

(57) **Abstract**

A data logging monitoring instrument and related methods are described. One aspect provides a particle counting instrument, including: one or more sensors; a storage system; and a processing system coupled to the storage system, the processing system being configured to accumulate measurement data ascertained via the one or more sensors in the storage system into one or more log files; wherein the one or more log files are stored in a secure file format that is compatible with other non-particle counting instrument information processing device applications. Other embodiments are described.

## Description

### FIELD OF THE INVENTION

The subject matter described herein generally relates to a particle monitoring instruments and methods, and more particularly, to secure data logging in connection with particle monitoring.

### BACKGROUND

The monitoring of measurement data is commonly performed for a variety of processes, such as where a continuous or ongoing stream of measurements is obtained. An example context relevant to the description provided here is that of monitoring particles in clean rooms or areas, such as in integrated circuit or pharmaceutical manufacturing facilities. Monitoring instruments may measure and monitor on a batch basis or on a continuous basis. Such monitoring often produces and accumulates large amounts of measurement/monitoring data.

In certain circumstances, such as particle monitoring in a clean room of a pharmaceutical manufacturing facility, the measurement data must be stored and preserved, for example for use in connection with establishing regulatory compliance. Thus, preservation of measurement data may be needed for maintaining a monitoring record to show compliance or simply to monitor a process output over time to track the condition, accuracy, reliability, or other factors of a process.

Typically, long-term logging and preservation of such monitoring/measurement data has been accomplished by converting the measurement data into a series of printed outputs, such as printed pages or ticker tapes, for example. The paper printouts are stored or warehoused. The printouts may be time-stamped or dated in some manner. The printouts may require signature by an authorized person or persons in order to authenticate the records for future reliance. The paper printouts may require storage for a specified or mandated period of time, for example as dictated by regulation. In some cases, the paper printouts may require storage for a significant length of time.

Another method to secure data requires custom software for data extraction and storage, for example external software to poll devices connected to a network, that is, part of an integrated system of custom devices and software applications specifically designed to work together. For example, it is common practice for the pharmaceutical industry to gather data from instruments such as particle counters via a network connected device equipped with specialized software designed specifically for interfacing with the particle counting instrument. This data is then stored in a database on a remote computing device in a manner that complies with a regulator's requirements, e.g., the requirements under 21 CFR Part 11 of the Food and Drug Administration in the United States.

### BRIEF SUMMARY

In summary, one aspect provides a particle counting instrument, comprising: one or more sensors; a storage system; and a processing system coupled to the storage system, the processing system being configured to accumulate measurement data ascertained via the one or more sensors in the storage system into one or more log files; wherein the one or more log files are stored in a secure file format that is compatible with other non- particle counting system information processing device applications.

Another aspect provides a method comprising: monitoring particles in an environment using one or more sensors of a particle counting instrument; and storing measurement data ascertained via the one or more sensors in a storage system of the particle counting instrument, the measurement data being stored as one or more log files; wherein the one or more log files are stored in a secure file format that is compatible with other non-particle counting system information processing device applications.

A further aspect provides a computer program product comprising: a non-signal storage device including instructions that are executable by a processing system, the instructions comprising: instructions configured to receive measurement data in a native file format corresponding to a data file of a particle counting instrument used to monitor particles in an environment using one or more sensors of the particle counting instrument; and instructions configured to convert and store the measurement data in a storage device as one or more log files compatible with other non-particle counting system information processing device applications.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings.

### BRIEF DESCRIPTION OF THE SEVERAL VIEWS OF THE DRAWINGS

FIG. 1 shows a block diagram of an example data logging monitoring instrument.

FIG. 2 is a flowchart for an example data logging method in a monitoring instrument.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, appearances of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well-known structures, materials, or operations are not shown or described in detail to avoid obfuscation. The following description is intended only by way of example, and simply illustrates certain example embodiments.

As noted herein, the generation and storage of paper data logging printouts in conventional approaches to maintaining monitoring data of particle counters has drawbacks. Paper data logs are costly and time-consuming to generate, store, and maintain, especially given that for most applications, a large number of paper data logging printouts are generated. In addition, such paper data logging printouts may degrade due to humidity, temperature, rodent or insect damage, or other factors. Thermal paper data logging printouts may be even more problematic and may decay faster due to their nature.

The generation and storage of paper data logging printouts is not an economical long-term way to store data. The bulk of paper data logging printouts may become unwieldy. Further, when a required storage period has expired, the disposal of large quantities of paper data logging printouts is costly.

Additionally, utilization of specialized, custom software that has been specifically designed to interface with a particle counter instrument for data extraction is cost prohibitive in many instances. Moreover, such custom software becomes useless if not matched to the appropriate particle counter instrument or a device from the overall "system" (that is, the custom software will not be compatible with other particle counter instruments or other non-particle counting system information processing device applications generally). For example, without custom software, a non-particle counting system information processing device user (for example, a FDA employee operating a standard laptop with common laptop applications such as ADOBE READER document viewer, MICROSOFT OFFICE applications, et cetera) would not be able to extract and/or view the measurement data without a copy of the custom software that matches the particular type of particle counter that produced the data. ADOBE READER is a registered trademark of Adobe Systems Incorporated in the United States and/or other countries. MICROSOFT OFFICE is a registered trademark of Microsoft Corporation in the United States and/or other countries.

Accordingly, an embodiment provides a particle counter (also referred to herein as a "particle counting instrument", a "monitoring instrument" or simply an "instrument") that stores measurement data (for example, particle count monitoring data) in a secure form such that it cannot be easily manipulated, as in the way a simple text file may be manipulated, but such that the secure form is easily handled by a wide variety of devices and commonly used applications. Measurement data may also include temperature, RH, particle flow rate (through a sensor), room pressure, room air velocity, or some suitable combination of the foregoing. For example, room pressure and air velocity are measurements required for compliance determination in a clean room.

For example, in one embodiment, a particle counter is configured to convert raw measurement data (received from one or more sensors) and store it as a secure portable document format file (for example, a .pdf file-such as defined by ISO standard ISO 32000-1). Thus, the raw measurement data is stored in a secure file (such that it cannot be easily or inadvertently manipulated), thus complying with regulatory requirements such as 21 CFR Part 11. Moreover, the secure file is in a format that can easily be handled by a common device application (so called non-particle counting system information processing device application) such that specialized equipment or custom software is not needed to open and/or view it. Thus, once the file is transferred from a particle counter to another device (for example, a laptop computer), the secure file may be opened with a common application (for example, ADOBE READER document viewer application). Thus, the secure file format is compatible with other non-particle counting system information processing device applications such as for example a portable document format, a JPEG (joint photographic experts group) format, a GIF (graphics interchange format) format, a TIFF (tagged image file format) format, a PNG (portable network graphics) format, and/or a BMP (bitmap) format. Other broadly adopted and secure file formats may be used.

In one embodiment, a data logging monitoring instrument comprises: a storage system storing a sequence of log files comprising one or more log files; a communication port configured to exchange communications; and a processing system coupled to the storage system and to the communication port, with the processing system configured to accumulate measurement data in the storage system, save the measurement data into a log file of the sequence of log files, detect an event indicative of transfer of a log file, such as a portable memory device being brought into communication with the monitoring instrument, and offload at least one log file of the sequence of log files from the monitoring instrument to the portable memory device, wherein the at least one offloaded log file comprises a secure file format without the use of external software. The operating software that generates the secure file is included in the instrument.

In one embodiment, the measurement data is saved into the at least one log file in a secure file format. The at least one log file may be converted into a secure file format upon transfer of the at least one log file to a portable memory device. The at least one log file may include a predetermined log file folder configured to hold one or more log files. The at least one log file may include a predetermined date/time-identified log file folder configured to hold one or more log files. Further, the monitoring instrument may verify the portable memory device before the offloading. Further, the monitoring instrument may delete the at least one log file from the sequence of log files after the offloading. The at least one log file may be autonomously selected by the monitoring instrument for offloading. The at least one log file may also be selected by a user for offloading. The log file is readable with commonly available software such as a PDF file viewer. The secure file can not be modified by the commonly available software.

In one embodiment, a data logging method for a monitoring instrument comprises: accumulating measurement data in the monitoring instrument; saving the measurement data into a log file of a sequence of log files; detecting a portable memory device being brought into communication with the monitoring instrument; and offloading at least one log file of the sequence of log files from the monitoring instrument to the portable memory device, wherein the at least one offloaded log file comprises a secure file format. The measurement data may be saved into the at least one log file in a secure file format. The at least one log file may be converted into a secure file format upon transfer of the at least one log file to the portable memory device. The at least one log file may include a predetermined log file folder configured to hold one or more log files. The at least one log file may include a predetermined time-identified log file folder configured to hold one or more log files. Further, the instrument may verify the portable memory device before the offloading. Further, the instrument may delete the one or more log files from the sequence of log files after the offloading. The at least one log file may be autonomously selected by the monitoring instrument for offloading. The at least one log file may also be selected by a user for offloading. In one embodiment, the instrument may be programmed to periodically offload the log file (or log files), in their secure but commonly readable format, to one or more connected devices. For example, the instrument may be programmed to email the one or more log files to an email address of a company employee on a weekly basis. In this case, the monitoring instrument would be appropriately configured for network connectivity and have an email application. Other methods of periodically and automatically reporting may also be included in one or more embodiments.

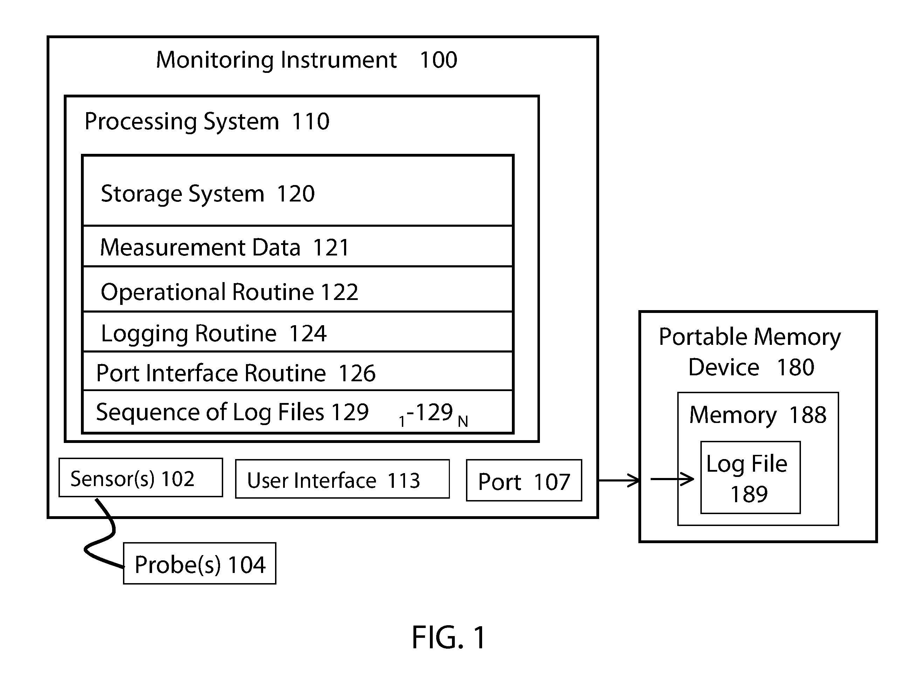

FIG. 1 shows an example data logging monitoring instrument 100 according to an embodiment. The monitoring instrument 100 may comprise a paperless data logging particle monitoring instrument 100. The monitoring instrument 100 can comprise any manner of instrument capable of generating measurement data. The monitoring instrument 100 can comprise a field-deployed instrument and/or remotely-deployed instrument, wherein measurement data generated by the monitoring instrument 100 is not necessarily communicated to or available to a user. Consequently, some manner of portable (or external) memory device 180 may be used to offload measurement data from the monitoring instrument 100.

The monitoring instrument 100 can produce any manner of measurements. In some embodiments, the monitoring instrument 100 may produce particle counts, including particle counts of particles in a liquid. For example, the monitoring instrument 100 may be a turbidimeter or nephelometer. For example, the monitoring instrument 100 may monitor a water treatment process and may generate water quality measurements of any type. It should be understood, however, that other instrument types and instrument environments are contemplated and are within the scope of the description and claims.

In operation, the monitoring instrument 100 generates a sequence of measurements over time. The measurements may be separated by any length of time or may be essentially continuous. The measurement data is stored by the monitoring instrument 100. The measurement data may be internally stored in an unsecure format or in a secure format.

The monitoring instrument 100 in some embodiments includes a processing system 110, a communication port 107, one or more sensors 102, and a user interface 113. The one or more sensors 102 may be fully contained within the monitoring instrument 100 or may include a probe or probes that are coupled to and extend from the monitoring instrument 100.

The processing system 110 is coupled to the one or more sensors 102, to the communication port 107, and to the user interface 113. The processing system 110 may control the overall operation of the monitoring instrument 100 and may control the operation of the one or more sensors 102. The processing system 110 can receive, process, and/or store measurement values generated by the one or more sensors 102. The processing system 110 can exchange commands and data with the user interface 113 and thereby can display data, operating conditions, available commands, user selections, et cetera, with a user or operator. The processing system 110 can exchange communications and data with the communication port 107 and thereby can exchange communications and data with external devices. It should be understood that other processing system operations are contemplated and are within the scope of the description and claims.

The monitoring instrument 100 may further include a storage system 120. The storage system 120 may comprise part of the processing system 110 or may comprise a separate component or components embedded within the instrument. The storage system 120 may store, for example, an operational routine 122, measurement data 121, a logging routine 124, a port interface routine 126, and a sequence of log files 129₁-129_{N}. Other data to be stored in the storage system 120 is contemplated and is within the scope of the description and claims.

The processing system 110 may execute the operational routine 122 in order to perform general operation of the monitoring instrument 100. General operation of the monitoring instrument 100 may include performing communications with the one or more sensors 102. General operation of the monitoring instrument 100 may include generating and storing the measurement data 121. The measurement data 121 may comprise continuous, periodic, and/or intermittent measurement values. General operation of the monitoring instrument 100 may include performing communications with the user interface 113, wherein the processing system 110 may generate displays to a user and may receive inputs from the user through the user interface 113. General operation of the monitoring instrument 100 may include performing communications with the communication port 107 and sending and receiving communications and data with an external device or devices.

The processing system 110 may execute the logging routine 124 to process the measurement data 121 and generate log files 129, wherein over time the monitoring instrument 100 may generate and store the log files 129 into the sequence of log files 129₁-129_{N}. Where a large amount of measurement data is generated, or where the monitoring instrument 100 accumulates and stores measurement data over a significant period of time, the sequence of log files 129₁-129_{N} may comprise a chronologically-ordered sequence of log files 129₁-129_{N} that includes a plurality of individual log files 129.

Each log file 129 may be of a limited size. A log file 129 may be limited to a predetermined data size. A log file 129 may be limited to a predetermined monitoring time length. A log file 129 may be limited to a predetermined paper page size. It should be understood that other file size limits are contemplated and are within the scope of the description and claims.

The processing system 110 may execute the logging routine 124 to put the log files 129 into a desired file format or organizational scheme in some embodiments. The sequence of log files 129₁-129_{N} may comprise a sequence of secure log files 129₁-129_{N}. In order to comprise a secure file format, a log file 129 may be of a format that does not allow changes to a portion thereof, or that requires additional processes, information, and/or devices in order to later access and change the contents of the log file 129. This may be needed or required where the measurement data must be kept and preserved for a predetermined span of time, such as where the measurement data is used to satisfy regulatory requirements or is used for any type of long-term monitoring. When in a secure file format, a log file 129 does not comprise raw measurement data, for example. When in a secure file format, a log file 129 does not comprise a standard text or alphanumeric file, for example.

The sequence of log files 129₁-129_{N} may comprise any manner of suitably secure and reliable files. In some embodiments, the sequence of log files 129₁-129_{N} may comprise portable document format, ".pdf", files. In alternative embodiment, the sequence of log files 129₁-129_{N} may comprise digital image file types, for example JPEG, GIF, TIFF, PNG, and BMP. The sequence of log files 129₁-129_{N} may be encrypted in any suitable manner. The sequence of log files 129₁-129_{N} may be locked and/or password protected. It should be understood that other file types, formats, organizational schemes, and/or security measures are contemplated and are within the scope of the description and claims.

Alternatively, or in addition, the sequence of log files 129₁-129_{N} may comprise one or more log file folders, where a log file folder may be configured to hold one or more log files. In some embodiments, a log file folder may include only the log files for a particular day or other predetermined time period. In this manner, log file folders may be used to organize log files within the sequence of log files 129₁-129_{N}. Further, the log file folder may comprise a predetermined time-identified log file folder that is configured to hold one or more log files 129, such as daily log file folders wherein each daily log file folder holds log files for that day (or other predetermined time period). It should be understood that a log file folder may include any number of log files 129 or the log file folder may be empty.

As part of converting log files into a desired file format or organizational scheme, the logging routine 124 may append additional information into a log file. The logging routine 124 may append settings or configuration of the monitoring instrument 100 into a log file. The logging routine 124 may append an instrument identifier and/or instrument location into a log file. The logging routine 124 may append a time/date stamp or stamps for the included measurement data into a log file. The logging routine 124 may append a user identifier into a log file. The logging routine 124 may append information regarding the formation of the log file into a log file. The logging routine 124 may append information regarding the offloading into a log file. Other information is contemplated and is within the scope of the description and claims.

The processing system 110 may execute the port interface routine 126 to communicate via the communication port 107. The communications may comprise any manner of external communications, including wired or wireless communications. Wired communications may include universal serial bus (USB) or Ethernet communication formats, but may further comprise any suitable manner of serial or parallel communications. The wired communications may comprise any manner of digital or analog communications. Wireless communications can include any manner of radio, optical, acoustic, or inductive communications.

The processing system 110 may execute the port interface routine 126 to detect a portable memory device 180 being brought into communication with the monitoring instrument 100. The processing system 110 may execute the port interface routine 126 to verify the portable memory device 180 as comprising an appropriate and/or authorized data logging device. The port interface routine 126 may interact with the user interface 113 to allow the user to confirm or deny an offloading process. The port interface routine 126 may interact with the user interface 113 to allow the user to select log files of the sequence of log files 129₁-129_{N} to be offloaded. The port interface routine 126 may interact with the user interface 113 to select a format or organizational scheme for the at least one log file in some embodiments. The port interface routine 126 may interact with the user interface 113 to add or append offload data to the at least one log file, such as a user identifier, for example. Other appendable data is contemplated and is within the scope of the description and claims. The port interface routine 126 may participate in offloading at least one log file from the monitoring instrument 100 to the portable memory device 180. The port interface routine 126 may optionally participate in deleting any offloaded log files from the sequence of log files 129₁-129_{N} in some embodiments.

The portable memory device 180 includes an electronic storage or memory 188. The portable memory device 180 may include any manner of digital or analog storage medium for receiving and storing the at least one log file as a log file 189. In some embodiments, the portable memory device 180 may additionally comprise communication hardware and may include software or firmware instructions for receiving and storing the at least one log file 189. In some embodiments, the portable memory device 180 may comprise a hard drive or a flash memory, such as a USB memory stick or card or a USB-capable device including some manner of memory.

In some embodiments, the portable memory device 180 may include other components, such as a processing system. Further, the portable memory device 180 may be capable of performing additional functions. For example, the portable memory device 180 may comprise a laptop or netbook computer, a cellphone or personal digital assistant (PDA), or any other manner of portable communication or computer device. Alternatively, the portable memory device 180 may comprise a specialized device designed for a file-carrying or file-transfer function, including a specialized data logger device designed for accumulating logging data from one or more deployed monitoring instruments 100.

It should be understood that the data values and executable routines discussed above are given for illustration and are not limiting and could be combined or sub-divided. Additional data values and executable routines may be included in the monitoring instrument 100.

The monitoring instrument 100 may be configured to a default operational configuration. Alternatively, the monitoring instrument 100 may be configured by the user. In some embodiments, the user may be able to select or configure the log files 129, including the size or length of a log file 129, the format or organizational scheme of a log file 129, add-on information (time information, user information, instrument information, et cetera) that may be added to a log file 129, and/or security characteristics of a log file 129. It should be understood that other configurable/selectable aspects are contemplated and are within the scope of the description and claims.

In some embodiments, the user may be able to select or configure the monitoring instrument 100, including designations of authorized portable memory devices 180, communication settings, enablement or disablement of the auto-detecting of a portable memory device 180 and information for the auto-detecting process, information concerning a secure file format to be used for the log files, configuration of when log data is to be converted into a secure file format, and/or storage configuration information regarding internal storage of the measurement data and/or log files. It should be understood that other configurable/selectable aspects are contemplated and are within the scope of the description and claims.

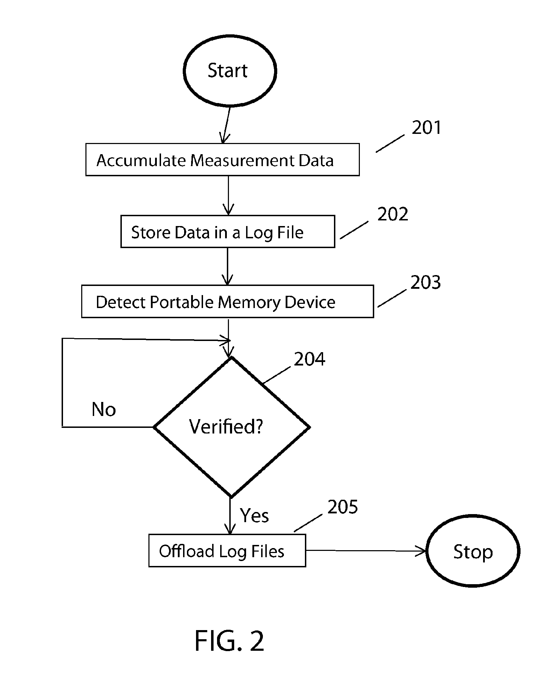

FIG. 2 is an example method 200 for data logging in a monitoring instrument 100 according to an embodiment. In some embodiments, the method may comprise a paperless data logging method. In step 201, the monitoring instrument 100 generates or accumulates measurement data in some manner. The measurement data can comprise continuous, periodic, or intermittent measurement data. The measurement data can be generated by one or more sensors or devices 102 of the monitoring instrument 100.

In step 202, the measurement data 121 is stored within the monitoring instrument 100. The measurement data 121 may be stored in any desired format or organizational scheme commensurate with the embodiments described herein. The measurement data 121 can comprise a temporary or initial storage. The measurement data may alternatively or additionally be stored in a log file or files 129. The measurement data may be stored in a log file or files of a predetermined size, as previously discussed.

The measurement data may continue to be generated and stored over time. As a result, the monitoring instrument 100 may generate a sequence of log files 129₁-129_{N}, where when a current log file is full, a new log file is created and filled. The sequence of log files 129₁-129_{N} may comprise any manner of suitably secure and reliable file format, as previously discussed.

In step 203, the monitoring instrument 100 detects a portable memory device 180, such as by detecting an attempted communication with a portable memory device 180. The attempted communication can include a transmission initiation message or signal that is sent by the monitoring instrument 100, sent by the portable memory device 180, or by both. The attempted communication can comprise the user bringing the portable memory device 180 into proximity of the monitoring instrument 100, whereupon the monitoring instrument 100 may detect the portable memory device 180. The attempted communication can comprise the user physically connecting the portable memory device 180 to the monitoring instrument 100. The attempted communication can comprise the user initiating a communication message or signal between the portable memory device 180 and the monitoring instrument 100. The attempted communication can comprise the user generating an input to the monitoring instrument 100 confirming or permitting the communication.

The transmission can comprise a wire transmission, wherein a physical connection of the portable memory device 180 to the monitoring instrument 100 may comprise the transmission initiation message or signal. The wire transmission can comprise communication over any suitable wired communication format, including network communication formats, as previously discussed.

The transmission can comprise a wireless transmission, wherein a wireless transmission initiation message or signal is received and acted on when the portable memory device 180 is brought into suitable range of the monitoring instrument 100. The wireless communication can comprise a wireless radio transmission in some embodiments. Alternatively, the wireless transmission can comprise any suitable inductive, optical, or acoustic wireless communication.

In step 204, the monitoring instrument 100 may verify the portable memory device 180. The verification may comprise verifying the portable memory device 180 as comprising an appropriate logging device. The verification may comprise verifying the portable memory device 180 as comprising an authorized logging device.

The verification may comprise any suitable verification process. The verification may comprise a handshaking process, a key exchange process, an encryption initiation process, or a device lookup process. Alternatively, the verification may include a confirmation or initiation by the user, and may include the user inputting information, such as a user identifier or password, for example, or providing a user input confirming that an offloading process is to be performed. Additional or alternative verification processes, or alternatively having no verification process, are contemplated and are within the scope of the description and claims.

If the verification process is successful, then the method may proceed to step 205. However, if the verification process fails, the method may not proceed to step 205. Instead, the method may exit, may re-try the verification process one or more times, or may perform other verification fail steps.

It should be understood that the verification step 204 is not mandatory in the process. Further, where limitations exist on bringing the portable memory device 180 into communication with the monitoring instrument 100, including the existence of a physical enclosure or remoteness of the monitoring instrument 100, for example, then the verification step 204 may not be needed.

In step 205, at least one log file 129 is offloaded from the monitoring instrument 100 to the portable memory device 180, where it may be stored as a device log file 189. The device log file 189 subsequently be stored and/or transported. It should be understood that multiple log files 129 may be offloaded. In some circumstances, all of the log files in the monitoring instrument 100 may be offloaded. Alternatively, only some of the log files may be offloaded. In some embodiments, the user may select the log files 129 to be offloaded.

The at least one log file 129 may be stored on the instrument and even offloaded in a current (unsecure) format, and later transformed into a secure format on another device. The at least one log file 129 may be transformed by the offloading. For example, the offloading may include transforming the at least one log file 129 into a more secure format or organizational scheme as part of the log file 189. For example, the at least one log file may be stored in the monitoring instrument 100 in a native or unsecure format, wherein the at least one log file 129 is offloaded onto the portable memory device 180 in a secure file format or organizational scheme, such as when being transferred to become the log file 189.

The offloading may comprise copying the at least one log file 129 to the portable memory device 180. In some embodiments, the offloading process may include removing or deleting the at least one log file 129 from the monitoring instrument 100 after the offloading has been performed. The offloaded log file may be stored in the portable memory device 180 as an at least one secure log file 189.

In addition, the offloading may include adding other information to a log file or files. As discussed above, information regarding data generation times and dates, offloading times and dates, user information, and/or monitoring instrument information, for example, may be added to a log file or files. However, it should be understood that such information could have been previously added to the log file or files.

Alternatively, the offloading may comprise offloading one or more log file folders. A log file folder may include only the log files for a particular day or other predetermined time period, for example. Consequently, the offloading may be automated and may comprise the automatic transfer of a current or previous day's log file folder, for example. The offloading may include finding or creating a predetermined time-identified log file folder. The predetermined time-identified log file folder may be selected and offloaded.

After the offloading, the portable memory device 180 may be moved away from the monitoring instrument 100. The log file or files 189 may be temporarily or permanently stored in the portable memory device 180. The portable memory device 180 may be used to transport or distribute the log file or files 189. Further, the portable memory device 180 may be stored in an archive or other storage, retaining the log file or files 189.

The data logging monitoring instrument and method can be employed according to any of the embodiments in order to provide several advantages, if desired. The data logging monitoring instrument and method according to any of the embodiments may comprise a paperless data logging monitoring instrument and method. The data logging monitoring instrument and method eliminates the need for paper printouts of the logged data. The data logging monitoring instrument and method mimics a paper or ticker tape output, using secure electronic files. The data logging monitoring instrument and method eliminates the need for printing, copying, and archiving ticker tape or other paper-based output.

The data logging monitoring instrument and method automates and streamlines the generation of log files, reducing amount of time and labor needed to create log files. The data logging monitoring instrument and method provides log file generation through the use of a portable memory device, wherein a user or operator need only perform fast and simple steps. Alternatively, the generation and offloading of log files may be automatic or at least partially automated. The data logging monitoring instrument and method can generate log files in real time or retroactively, wherein the log data can be later transferred, printed, displayed, or otherwise used or manipulated. In some embodiments, the data logging monitoring instrument and method can be configured to automatically communicate with and offload log files when an appropriate portable memory device is brought into communication with the monitoring instrument.

As will be appreciated by one skilled in the art, various aspects may be embodied as a system, method or computer (device) program product. Accordingly, aspects may take the form of an entirely hardware embodiment or an embodiment including software that may all generally be referred to herein as a "circuit," "module" or "system." Furthermore, aspects may take the form of a computer (device) program product embodied in one or more computer (device) readable medium(s) having computer (device) readable program code embodied thereon.

Any combination of one or more non-signal computer (device) readable medium(s) may be utilized. The non-signal medium may be a storage medium. A storage medium may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of network, including a local area network (LAN) or a wide area network (WAN), or the connection may be made through other devices (for example, through the Internet using an Internet Service Provider) or through a hard wire connection, such as over a USB connection.

Aspects are described herein with reference to the figures, which illustrate example methods, devices and program products according to various example embodiments. It will be understood that the actions and functionality illustrated may be implemented at least in part by program instructions. These program instructions may be provided to a processor of a general purpose computer, special purpose computer, or other programmable data processing device or information handling device to produce a machine, such that the instructions, which execute via a processor of the device implement the functions/acts specified.

The program instructions may also be stored in a device readable medium that can direct a device to function in a particular manner, such that the instructions stored in the device readable medium produce an article of manufacture including instructions which implement the function/act specified.

The program instructions may also be loaded onto a device to cause a series of operational steps to be performed on the device to produce a device implemented process such that the instructions which execute on the device provide processes for implementing the functions/acts specified.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope or spirit of the disclosure.

## Claims

1. A particle counting instrument, comprising:
one or more sensors;
a storage system; and
a processing system coupled to the storage system, the processing system being configured to accumulate measurement data from the one or more sensors in the storage system into one or more log files;
wherein the processing system is configured to store the one or more log files in a secure file format that is compatible with other non-particle counting system information processing device applications.

2. The particle counting instrument of claim 1, wherein the secure file format is an image file format.

3. The particle counting instrument of claim 1, wherein the secure file format is a portable document format.

4. The particle counting instrument of claim 1, wherein the processing system is configured to convert the one or more log files into the secure file format while resident in said particle counting instrument.

5. The particle counting instrument of claim 1, wherein the processing system is configured to convert the one or more log files into the secure file format in response to a request to transfer the one or more log files to an external memory device.

6. The particle counting instrument of claim 1, wherein the processing system is configured to delete one or more of the one or more log files responsive to transferring said one or more log files to an external memory device.

7. The particle counting instrument of claim 1, wherein the processing system is configured to periodically transfer the one or more log files to an external memory device.

8. The particle counting instrument of claim 1, wherein the processing system is configured to wirelessly transfer the one or more log files to an external memory device.

9. The particle counting instrument of claim 1, wherein the processing system is configured to wirelessly transfer the one or more log files to a predetermined network address.

10. A method comprising:
monitoring particles in an environment using one or more sensors of a particle counting instrument; and
storing measurement data ascertained via the one or more sensors in a storage system of the particle counting instrument, the measurement data being stored as one or more log files;
wherein the one or more log files are stored in a secure file format that is compatible with other non-particle counting system information processing device applications.

11. The method of claim 10, wherein the secure file format is an image file format.

12. The method of claim 10, wherein the secure file format is a portable document format.

13. The method of claim 10, further comprising converting the one or more log files are into the secure file format while resident in said particle counting instrument.

14. The method of claim 10, further comprising converting the one or more log files into the secure file format in response to a request to transfer said one or more log files to an external memory device.

15. The method of claim 10, further comprising deleting one or more of the one or more log files responsive to transferring said one or more log files to an external memory device.
